(19) Europäisches Patentamt
European Patent Office
Office européen des brevets

(11) **EP 3 031 202 B1**

(12) **EUROPEAN PATENT SPECIFICATION**

(45) Date of publication and mention
of the grant of the patent:
**20.02.2019 Bulletin 2019/08**

(51) Int Cl.:
*H04N 5/357* (2011.01)    *H04N 9/04* (2006.01)
*H04N 9/73* (2006.01)

(21) Application number: **14756150.0**

(22) Date of filing: **04.08.2014**

(86) International application number:
**PCT/US2014/049603**

(87) International publication number:
**WO 2015/020958 (12.02.2015 Gazette 2015/06)**

(54) **DYNAMIC COLOR SHADING CORRECTION**

DYNAMISCHE FARBSCHATTIERUNGSKORREKTUR

CORRECTION DYNAMIQUE D'OMBRAGE DE COULEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.08.2013 US 201361863353 P
06.12.2013 US 201314099603**

(43) Date of publication of application:
**15.06.2016 Bulletin 2016/24**

(73) Proprietor: **Qualcomm Incorporated
San Diego, CA 92121-1714 (US)**

(72) Inventors:
• **SHU, Xianbiao**
  **San Diego, California 92121-1714 (US)**
• **JIANG, Xiaoyun**
  **San Diego, California 92121-1714 (US)**
• **SIDDIQUI, Hasib Ahmed**
  **San Diego, California 92121-1714 (US)**

(74) Representative: **Howe, Steven
  Reddie & Grose LLP
  The White Chapel Building
  10 Whitechapel High Street
  London E1 8QS (GB)**

(56) References cited:
**US-A1- 2003 220 741    US-A1- 2007 146 506
US-A1- 2012 120 255**

• **YUANJIE ZHENG ET AL: "Single-Image
Vignetting Correction", IEEE TRANSACTIONS
ON PATTERN ANALYSIS AND MACHINE
INTELLIGENCE, IEEE COMPUTER SOCIETY,
USA, vol. 31, no. 12, 1 December 2009
(2009-12-01), pages 2243-2256, XP011266796,
ISSN: 0162-8828, DOI: 10.1109/TPAMI.2008.263**

**Description**

**TECHNICAL FIELD**

The systems and methods disclosed herein relate generally to image capture devices, and more particularly, to correcting color distortion in captured images.

**BACKGROUND**

Images captured using digital cameras suffer from brightness and color shading distortions that can compromise the quality of captured photos. Brightness shading, also known as vignetting, is a position dependent decrease in the amount of light transmitted by an optical system causing darkening of an image near the edges. Vignetting, which affects both film and digital cameras, refers to a decrease in the amount of light transmitted by an optical system near the periphery of the lens field-of-view (FOV) causing gradual darkening of an image at the edges. Vignetting can be effectively fixed by calibrating the lens roll off distortion function of the camera.

Color shading is similar in effect and manifests as shift in color near the edges of the sensor. Color shading distortion is specific to digital cameras. The spectral sensitivity of a typical charge-coupled device (CCD) or complementary metal-oxide-semiconductor (CMOS) sensor is higher at the red end of the spectrum of visible light than at the blue end of the spectrum, and also extends considerably into the near infrared (IR) spectrum. The relatively high sensitivity of such sensors to IR light can cause errors in color reproduction. Therefore, in most digital sensors, the IR sensitivity is limited by a thin-film reflective IR filter at the face of the sensor that blocks the infrared wavelength while passing visible light. However, the transmittance of the IR filter shifts to shorter wavelengths as the angle of light incident on the filter increases. Accordingly, longer wavelengths (such as red light) can be blocked more at the edges of the image sensor due to larger incident light ray angles, resulting in a spatially non-uniform color temperature in the image.

Conventionally, color shading artifacts are corrected by per-unit-calibration, which measures color shading profiles of an individual image capture device under a set of illuminants from images of a flat-field scene captured by the image capture device under each illuminant in the set. The inverse of the two-dimensional profile of color shading under each illuminant is stored as a correction table to compensate for color shading artifacts in images captured by the image capture device. When capturing an image, the image capture device first employs a white balance algorithm to detect the scene illuminant from the captured data on the sensor and then selects the corresponding correction table to compensate for color shading distortion. In patent document US2012/0120255, a method for estimating a defect in an image-capturing system (1) is discussed. This method produces, with regard to any first image (I) representing any scene (S), a variation in the field of a characteristic of the first image, having an order of magnitude that is statistically lower than a variation in the field of said characteristic added by the scene. The method comprises: calculating, in at least a first portion of the field of the first image, a measurement related to said characteristic of the first image; and obtaining, in at least one second portion of the field of the first image, an estimative magnitude of said defect, depending on the calculated measurement and having a variation having the same order of magnitude as the variation in the field of said characteristic of the first image produced by said defect. In document YUANJIE ZHENG ET AL: "Single-Image Vignetting Correction", IEEE TRANSACTIONS ON PATTERN ANALYSIS AND MACHINE INTELLIGENCE, IEEE COMPUTER SOCIETY, USA, vol. 31, no. 12, 1 December 2009 (2009-12-01), pages 2243-2256, XP011266796, ISSN: 0162-8828, DOI: 10.1109/TPAMI.2008.263, a method is proposed for determining the vignetting function given only a single image. To extract vignetting information from an image, the document presents adaptations of segmentation techniques that locate image regions with reliable data for vignetting estimation. Within each image region, the method capitalizes on the frequency characteristics and physical properties of vignetting to distinguish it from other sources of intensity variation.

**SUMMARY**

Color shading artifacts in a captured image may deteriorate the quality of the image. However, existing methods for correcting color shading artifacts are complex, computationally expensive, sensor-dependent, and do not accurately correct color shading artifacts in scenes with multiple sources of illumination, scenes with objects having surfaces that vary the wavelength of incident light by reflection, or scenes with illumination sources that do not have a corresponding precalculated correction table. Accordingly, the color shading correction techniques described herein are calculated on the fly for any image sensor, and may be based on the illumination source type of an image scene as well as the objects in the captured image.

The severity of vignetting and color shading artifacts, among other factors, may depend on the chief ray angle (CRA) of light striking the imaging sensor. This factor may make wide-angle lens designs in compact cameras more prone to shading distortions. While vignetting can be fixed relatively easily using calibration of the optical system, color shading is a more complicated phenomenon primarily caused by interaction of the incident angle of the light with the infrared (IR) reflective filter on the sensor. Color shading depends on the spectra of the scene illuminant as well as the surface reflectances of the objects being imaged and, therefore, cannot be fixed robustly using pre-calibration techniques.

Several factors may contribute to color shading artifacts in an image. The infrared filters used to block unwanted infrared light from being captured by an image sensor generally have a steep cutoff at a chosen wavelength. However, the wavelength at which the cutoff occurs changes depending on the angle of incidence of the incoming light rays. For instance, the cutoff wavelength of a typical thin-film reflective IR filter is a function of the angle of the light arriving at the sensor, shifting monotonically towards the blue end of the spectrum with increase in the incident angle of light. Therefore, towards the edges of the camera field-of-view (FOV) where the chief ray angle (CRA) of the lens is greater, the IR filter cuts out more red light than at the center of the FOV. Consequently, the response of an imaging sensor equipped with a reflective IR filter is spatially non-uniform, resulting in a visually unpleasing color shading in the captured image. Color shading is typically more severe for compact, wide-angle optical systems, for example imaging devices in mobile phones. The compact size of camera modules used in mobile phones, coupled with relatively wide angle lenses, means the lens is very close to the image sensor, which thus receives light at angles that can become quite steep at the corners and edges of the image. The result is a significant variation in the color response across the image. In addition, other physical phenomena, e.g., lens vignetting, dependence of optical spatial crosstalk on CRA, and dependence of pixel quantum efficiency on the wavelengths of incident photons, may also contribute to color shading artifacts.

Despite being effective in some instances, this per-unit calibration method described above fails to provide a robust solution. For example, there is great variety in the number of possible illuminants with different wavelength spectra, making calibration of the color shading correction tables under all possible light sources costly and time-inefficient. Even if an image capture device has been calibrated to compensate for shading under all possible light sources, the illuminant classification determined by a performing a white balance analysis on the captured scene statistics may be incorrect. A wrong white balance determination may result in selection of an incorrect correction table for compensating for color shading, and the incorrect correction table may provide only a partial correction of the shading artifact. Further, per-unit calibration correction methods are not capable of operating successfully in mixed lighting conditions. In addition, pre-calibrated per-unit correction tables are accurate only for the calibrated sensor and for other sensors which do not deviate too much from the calibrated sensor's reference in their shading characteristics. Additionally, since color shading is a function of the wavelength spectra of the illuminant as well as of the objects being illuminated, pre-calibrated tables may not provide highly accurate correction, as shading correction with pre-calibrated tables only account for dependence of the shading characteristics on the illuminant spectra. Finally, the exact angle at which the IR filter is mounted with respect to the sensor is subject to a spread of manufacturing mechanical tolerances, potentially leading to off-center shading that varies device-to-device. Accordingly, pre-calibrated tables may not provide for accurate correction, as the pre-calibrated table may assume a different center location for the shading than is actually occurring in a device due to manufacturing

One aspect relates to a method in an electronic device for correcting color shading in a captured image, the method comprising receiving image data comprising the captured image and scene statistics, wherein the scene statistics are a downsampled version of the captured image; accessing a reference table, wherein the reference table comprises shading correction data calibrated on a reference module under a typical illumination; correcting color shading in the downsampled version of the captured image using the reference table; updating the reference table based on the estimated color shading; correcting color shading in the captured image using the updated reference table; estimating color shading in the corrected downsampled version of the captured image, wherein estimating color shading comprises: transforming the corrected downsampled version of the captured image into at least one hue channel (H) and estimating a first color shading component (S) and an intrinsic color component (I) which, when summed together, result in the at least one hue channel (H), wherein the intrinsic color component (I) represents the true hue content of the captured image scene; wherein estimating a first color shading component and an intrinsic color component comprises jointly minimizing the number of non-zero gradients in the intrinsic color component (I) and the magnitude of gradients in the first color shading component (S); updating the reference table based on the estimated color shading; and correcting color shading in the captured image using the updated reference table.

Another aspect relates to a dynamic color shading correction apparatus, comprising a correction table data repository configured to store a reference table, wherein the reference table comprises shading correction data calibrated on a reference module under a typical illumination; an initial color shading correction module configured to receive image data comprising a captured image and scene statistics, wherein the scene statistics are a downsampled version of the captured image, and to perform preliminary color shading correction on the downsampled version of the captured image using the reference table; a color shading estimation module configured to estimate color shading in the downsampled version of the captured image by transforming the corrected downsampled version of the captured image into at least one hue channel (H) and estimating a first color shading component (S) and an intrinsic color component (I) which, when summed together, result in the at least one hue channel (H), wherein the intrinsic color component (I) represents the true hue content of the captured image scene, wherein estimating a first color shading component (S) and an intrinsic color component (I) comprises jointly minimizing the number of non-zero gradients in the intrinsic color component (I) and the magnitude of gradients in the first color shading component (S); a table updating module configured to generate an updated table from the reference table and the estimated color shading; and a color shading correction module configured to correct color shading in the image data using the updated table.

## BRIEF DESCRIPTION OF THE DRAWINGS

The disclosed aspects will hereinafter be described in conjunction with the appended drawings and appendices, provided to illustrate and not to limit the disclosed aspects, wherein like designations denote like elements.

FIG. 1A illustrates an example of light incident on a filter at different chief ray angles;
FIG. 1B illustrates example shifts in transmittance of light through the filter based on the incident angles illustrated in FIG. 1A;
FIG. 1C illustrates a grayscale approximation of the spatial color nonuniformity of a captured image resulting from the transmittance shifts illustrated in FIG. 1B;
FIG. 2 illustrates a schematic block diagram of an example system with dynamic color shading correction capabilities;
FIG. 3 illustrates a schematic block diagram of an embodiment of a dynamic color shading corrector;
FIG. 4 illustrates an embodiment of a dynamic color shading correction process; and
FIG. 5 illustrates an embodiment of a color shading estimation process.

## DETAILED DESCRIPTION

Introduction

Embodiments relate to systems and methods for correcting color shading in a captured digital image. The color shading correction techniques described herein provide a framework for dynamic color shading correction (DCSC), which can estimate the color shading of a captured image on the fly from the scene statistics of the captured image and can use the estimated shading for color shading correction. The DCSC framework can use a color shading estimate method to separate out the color shading component from the actual image content by its unique characteristics in the gradient domain, for example, the characteristic that the color shading component is generally a slowly varying function. The DCSC technique can use the color shading estimate to update a pre-calibrated color shading correction table to accurately compensate for the color non-uniformity in the captured image regardless of the scene illuminant or surface reflectances. Because the updated color shading correction table is generated on the fly from the estimated color shading in the captured image, the DCSC framework does not assume that the scene illuminant is included in the pre-calibrated correction table, nor does it rely on a white balance algorithm to attempt detection of the scene illuminant, so can accurately correct for the specific color non-uniformity in the captured image. The DCSC technique is computationally efficient and can provide color shading correction in real-time, and in some embodiments operates efficiently and in real-time when implemented on a mobile device.

An embodiment of the color shading correction techniques may apply spatially-variant and color-channel-dependent gains to image pixels to dynamically compensate for a lack of color uniformity in a captured image. Typically, pixels farther away from the image center are multiplied with larger gains, while pixels at the image center get a unity gain. The two-dimensional profile of color shading distortion in an image depends on the actual wavelengths of light photons arriving at the sensor and, therefore, depends not only on the scene illuminant but also on the surface reflectance of the objects being imaged. Thus, correction gains used for correcting color shading artifacts in an image should be updated in response to a change in either the image scene illuminant or the image scene content. One embodiment is provided with a pre-calculated correction table, calibrated on a reference device under typical illumination.

In the following description, specific details are given to provide a thorough understanding of the examples. However, it will be understood by one of ordinary skill in the art that the examples may be practiced without these specific details. For example, electrical components/devices may be shown in block diagrams in order not to obscure the examples in unnecessary detail. In other instances, such components, other structures and techniques may be shown in detail to further explain the examples.

It is also noted that the examples may be described as a process, which is depicted as a flowchart, a flow diagram, a finite state diagram, a structure diagram, or a block diagram. Although a flowchart may describe the operations as a sequential process, many of the operations can be performed in parallel, or concurrently, and the process can be repeated. In addition, the order of the operations may be re-arranged. A process is terminated when its operations are completed. A process may correspond to a method, a function, a procedure, a subroutine, a subprogram, etc. When a process corresponds to a software function, its termination corresponds to a return of the function to the calling function or the main function.

Overview of Color Shading

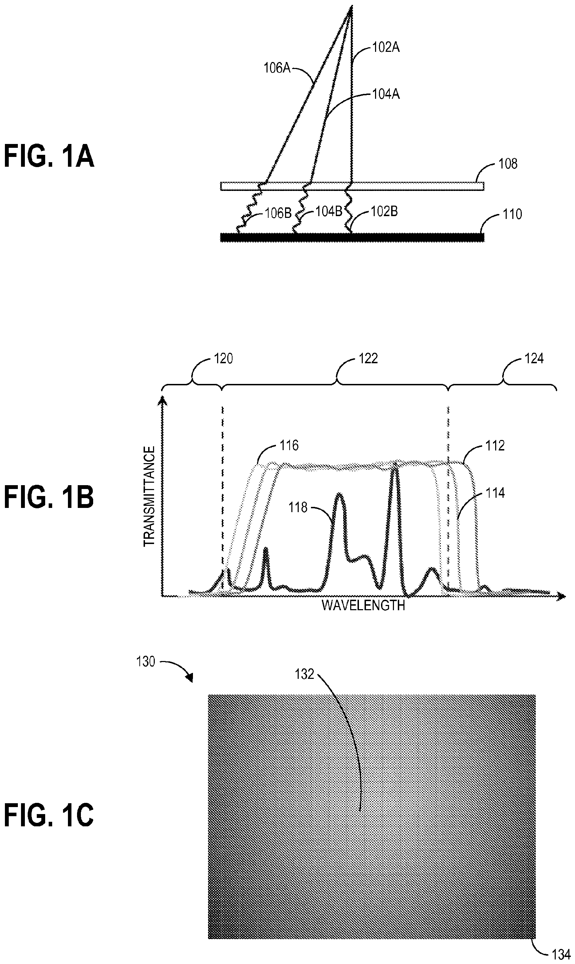

FIG. 1A illustrates an example of light incident on a filter 108 at different chief ray angles. Filter 108 is positioned above an image sensor 110. For illustrative purposes, light ray 102A is shown as being substantially normal to filter 108, light ray 104A has a greater angle of incidence than light ray 102A, and light ray 106A has a greater angle of incidence than light ray 104A. The graphical representations of wavelengths 102B, 104B, 106B illustrate how the spectra of light transmitted through the filter 108 to the sensor 110 shifts towards shorter wavelengths as the angle of incidence increases.

FIG. 1B illustrates example shifts in transmittance of light through the filter as a function of wavelength based on the incident angles illustrated in FIG. 1A. Transmittance spectrum 112 corresponds to incident light 102A at a substantially normal angle to the filter 108, transmittance spectrum 114 corresponds to incident light 104A, transmittance spectrum 116 corresponds to incident light 106A, and transmittance spectrum 118 is an example of the spectrum of light typically present in an image scene. As is apparent, the cut-on and cut-off wavelengths for light transmitted through the filter shifts towards shorter wavelengths as the angle of incidence increases, and therefore the sensor 110 receives different spectra of light in different regions of the sensor based on the incident angle of light on each portion of the sensor.

FIG. 1C illustrates a grayscale approximation of an example illustration of the spatial color nonuniformity of a captured image resulting from the transmittance shifts illustrated in FIG. 1B. A center region 132 typically has warmer color tones than a cooler edge region 134 due to the transmittance shift based on incident light angle.

System Overview

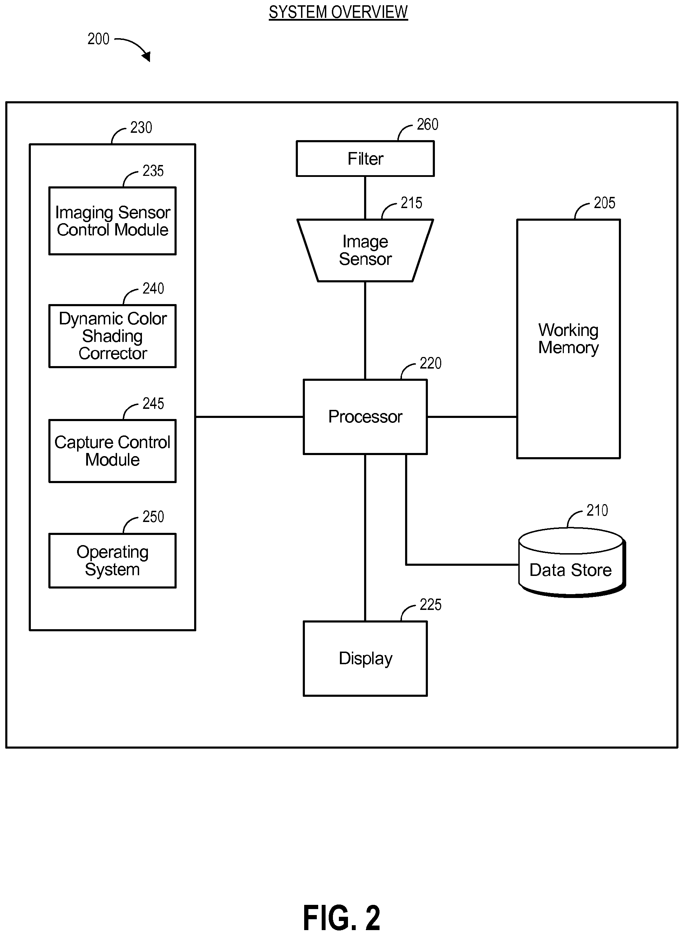

FIG. 2 illustrates a high-level block diagram of an example system 200 with dynamic color shading correction capabilities, the system 200 having a set of components including a processor 220 linked to an imaging sensor 215 having a filter 260. A working memory 205, storage 210, electronic display 225, and memory 230 are also in communication with the processor 220.

System 200 may be a device such as cell phone, digital camera, tablet computer, personal digital assistant, or the like. System 200 may also be a more stationary device such as a desktop personal computer, video conferencing station, or the like that uses an internal or external camera for capturing images. System 200 can also be a combination of an image capture device and a separate processing device receiving image data from the image capture device. A plurality of applications may be available to the user on system 200. These applications may include traditional photographic applications, capture of still images and video, dynamic color correction applications, and brightness shading correction applications, among others.

The image capture system 200 includes the image sensor 215 for capturing images. The image sensor 215 can be, for example, a charge-coupled device (CCD), a complementary metal-oxide semiconductor (CMOS) sensor, or the like. The image sensor 215 may be coupled to the processor 220 to transmit a captured image to the image processor 220. A filter 260 may be positioned near or within sensor 215, for example an infrared cutoff filter designed to reflect or block mid-infrared wavelengths while passing visible light. The image processor 220 may be configured to perform various operations on a received captured image in order to output a high quality color corrected image, as will be described in more detail below.

Processor 220 may be a general purpose processing unit or a processor specially designed for imaging applications. As shown, the processor 220 is connected to a memory 330 and a working memory 205. In the illustrated embodiment, the memory 230 stores an imaging sensor control module 235, dynamic color shading correction module 240, capture control module 245, and operating system 250. These modules include instructions that configure the processor to perform various image processing and device management tasks. Working memory 205 may be used by processor 220 to store a working set of processor instructions contained in the modules of memory 330. Alternatively, working memory 205 may also be used by processor 220 to store dynamic data created during the operation of device 200.

As mentioned above, the processor 220 is configured by several modules stored in the memory 230. The imaging sensor control module 235 includes instructions that configure the processor 320 to adjust the focus position of imaging sensor 215. The imaging sensor control module 235 also includes instructions that configure the processor 220 to capture images with the imaging sensor 215. Therefore, processor 220, along with image capture control module 235, imaging sensor 215, filter 260, and working memory 205 represent one means for capturing an image or sequence of images to be corrected for color shading.

The dynamic color shading correction module 240 includes instructions that configure the processor 320 to correct color shading in a captured image. For example, the dynamic color shading correction module 240 can estimate a color shading component in the captured image, and can use the estimated color shading component to generate a correction table to correct the color shading in the image. In some embodiments, the dynamic color shading correction module 240 can store a pre-calibrated reference table, which is calibrated to correct color shading on a reference device under typical illumination. In some embodiments, the pre-calibrated reference table can be stored in the data store 210. The dynamic color shading correction module 240 can use the estimated color shading to dynamically update the pre-calibrated reference table to correct the color shading in a captured image.

Capture control module 245 may include instructions that control the overall image capture functions of the system 200. For example, in an embodiment the capture control module 245 may include instructions that call subroutines to configure the processor 220 to capture image data of a target image scene using the imaging sensor 215. Capture control module 245 may then call the dynamic color shading corrector module 235 to correct color shading due to the filter 260 or other causes. Capture control module 245 may also call other processing modules not illustrated, for example a vignetting estimation and correction module.

Operating system module 250 configures the processor 220 to manage the memory and processing resources of the system 200. For example, operating system module 255 may include device drivers to manage hardware resources such as the electronic display 225, storage 210, or imaging sensor 215. Therefore, in some embodiments, instructions contained in the image processing modules discussed above may not interact with these hardware resources directly, but instead interact through standard subroutines or APIs located in operating system component 250. Instructions within operating system 250 may then interact directly with these hardware components.

The processor 220 may be further configured to control the display 225 to display the captured image to a user. The display 225 may be external to an imaging device including the image sensor 215 or may be part of the imaging device. The display 225 may also be configured to provide a view finder for a user prior to capturing an image, or may be configured to display a captured image stored in memory or recently captured by the user. The display 225 may comprise an LCD or LED screen, and may implement touch sensitive technologies.

Processor 220 may write data to storage module 210, for example data representing captured images, color shading estimation, and correction table data. While storage module 210 is represented graphically as a traditional disk device, those with skill in the art would understand that the storage module 210 may be configured as any storage media device. For example, the storage module 210 may include a disk drive, such as a floppy disk drive, hard disk drive, optical disk drive or magneto-optical disk drive, or a solid state memory such as a FLASH memory, RAM, ROM, and/or EEPROM. The storage module 210 can also include multiple memory units, and any one of the memory units may be configured to be within the image capture device 200, or may be external to the image capture system 200. For example, the storage module 210 may include a ROM memory containing system program instructions stored within the image capture system 200. The storage module 210 may also include memory cards or high speed memories configured to store captured images which may be removable from the camera.

Although FIG. 2 depicts a system comprising separate components to include a processor, imaging sensor, and memory, one skilled in the art would recognize that these separate components may be combined in a variety of ways to achieve particular design objectives. For example, in an alternative embodiment, the memory components may be combined with processor components to save cost and improve performance.

Additionally, although FIG. 2 illustrates two memory components-memory component 230 comprising several modules and a separate memory 205 comprising a working memory- one with skill in the art would recognize several embodiments utilizing different memory architectures. For example, a design may utilize ROM or static RAM memory for the storage of processor instructions implementing the modules contained in memory 230. Alternatively, processor instructions may be read at system startup from a disk storage device that is integrated into system 200 or connected via an external device port. The processor instructions may then be loaded into RAM to facilitate execution by the processor. For example, working memory 205 may be a RAM memory, with instructions loaded into working memory 205 before execution by the processor 220.

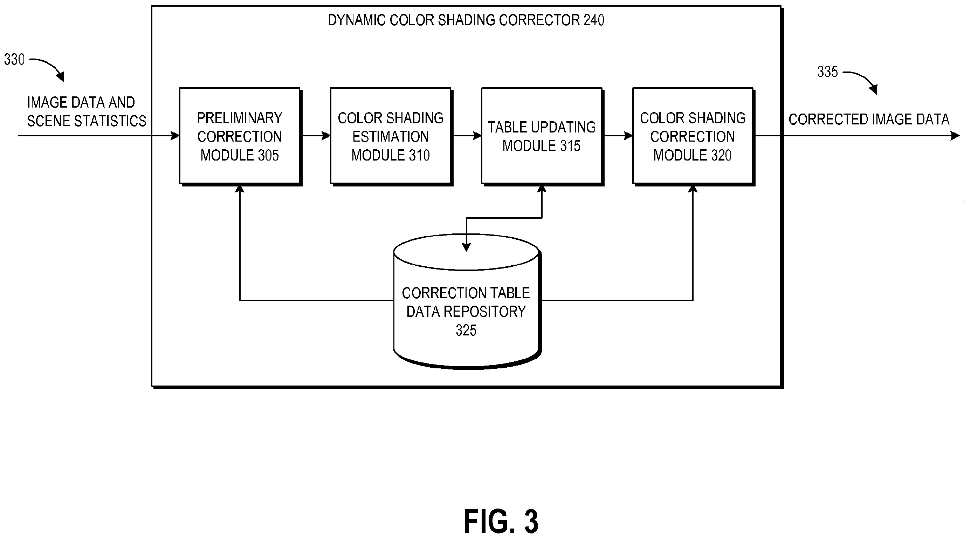

FIG. 3 illustrates a schematic block diagram of an embodiment of a dynamic color shading corrector 240. The dynamic color shading corrector 240 includes a preliminary correction module 305, a color shading estimation module 310, a table updating module 315, and a color shading correction module 320. Although discussed within the context of the image capture system 200, dynamic color shading corrector 240 can be implemented in other image capture systems suitable for color shading correction.

In an embodiment, the preliminary correction module 305 receives image data and scene statistics 330. The scene statistics can be a down-sampled version of the captured image, and in some embodiments can be a combination of four per-channel images for each Bayer channel- R. Gr, Gb, and B- of the captured image. In one embodiment, the dynamic color shading corrector 240 can receive only image data including a captured image, and can additionally include a scene statistics module (not illustrated) to generate scene statistics from the captured image. In some embodiments, the preliminary correction module 305 can be programmed to generate the scene statistics from image data of a captured image.

The preliminary correction module 305 can use a pre-calibrated reference table to correct at least some of the color shading in the scene statistics, where the pre-calibrated reference table is calculated on a reference image capture device capturing an image of a flat field under known illuminants. The pre-calibrated reference table can be stored in the correction table data repository 325. In some embodiments, shading correction is performed in the Bayer image domain, and the table can include four sub-tables each associated with the one of the four Bayer channels. The correction may be performed by multiplying the per-channel sub-table of the reference table with the per-channel scene statistics for each Bayer channel.

The preliminarily corrected scene statistics can be sent to the color shading estimation module 310. The color shading estimation module 310 can be configured with instructions that determine a color shading component from the corrected scene statistics. For example, RGB corrected scene statistics can be transformed into hue components, and the color shading component can be estimated from the hue components. The hue components, for instance, can represent a linear combination in the logarithmic domain of a color shading component, representing the color shading gradient of the captured image, and an intrinsic color component, representing the true hue content of the captured image scene. The color shading estimation module 310 can recover the color shading component for a captured image. In embodiments correcting color shading in video images, the color shading estimation module 310 can recover the color shading component for some or each frame in the video image sequence. In some embodiments, two hue channels may be used, and two color shading components can be recovered.

The table updating module 315 can receive data representing the color shading component or components from the color shading estimation module 310 and use the color shading components to dynamically update the pre-calibrated reference table to yield optimal color correction for the captured image. For a video sequence of images, the table can be dynamically updated for optimal correction for each frame in the video sequence based on the color shading components of each frame. For example, in an embodiment, two color shading components may each correspond to one of a red hue channel and a blue hue channel. To update the reference table, the table updating module 315 can divide the sub-table corresponding to the blue channel by the blue color shading component and can divide the sub-table corresponding to the red channel by the red color shading component. The updated correction table can be stored in the correction table data repository 325.

The updated correction table can be output to the color shading correction module 320 along with the captured image data. The color shading correction module 320 can use the updated correction table to correct color shading in the captured image. This correction may be performed separately for each bayer channel by an element-wise multiplication of the per-channel reference table with the per-channel scene statistics.

Although the dynamic color shading corrector 240 is discussed in the context of the system 200 of FIG. 2, it can be implemented on its own or in any system suitable for color shading correction.

Overview of Example Color Shading Processes

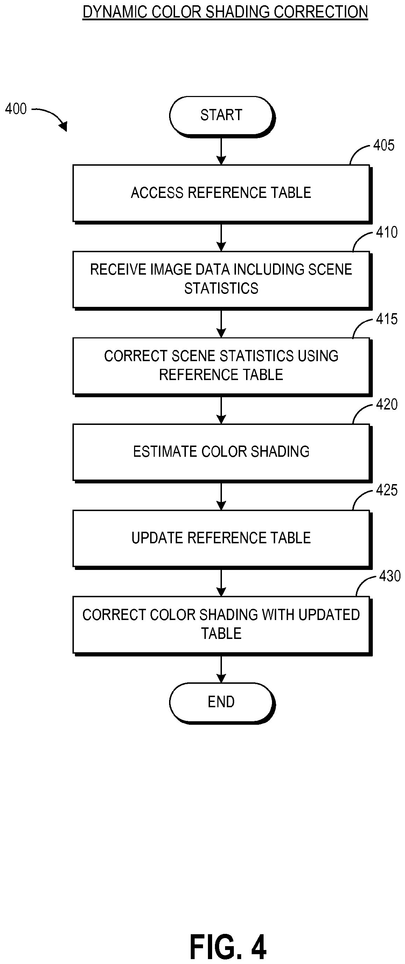

Turning now to FIG. 4, one embodiment of a dynamic color shading correction (DCSC) process 400 is described in more detail. The process 400 may be implemented in an image capture device such as a camera that takes still photographs or in a video camera that captures a sequence of image frames. The process 400 may be implemented on a computing system, for example including a processor, integrated into the image capture device, or may be implemented on a separate computing device which receives image data from the image capture device. The process 400 may be used to correct color shading in images captured by digital image capture devices such as digital cameras, mobile phone cameras, web cameras, tablet computer cameras, and gaming console cameras, to name a few examples. The process 400 may provide advantages in particular for compact cameras with wide fields of view.

At block 405, the DCSC method is provided with a single pre-calibrated color shading correction table for a reference image sensor under one illuminant. The single color shading correction table, referred to herein as the reference table T°, may be calibrated on a reference image capture device under a typical illumination of a flat field. The DCSC process 400 may be performed in the Bayer-image domain, and accordingly a shading correction table may include four sub-tables, each sub-table associated with one of the four Bayer domains *R*, *Gr, Gb,* and *B*.

Next, at block 410, image data is received, the image data comprising scene statistics of a captured image. Scene statistics, as used herein, refers to a down-sampled version of the captured image. In an embodiment, Bayer-image statistics X can be denoted as a combination of four per-channel images $X_R \in R^{m \times n}$, $X_{Gr} \in R^{m \times n}$, $X_{Gb} \in R^{m \times n}$, and $X_B \in R^{m \times n}$. Since color shading may vary very gradually in the spatial domain, it may be sufficient to base the estimate of the color shading profile on the scene statistics rather than on the full-resolution captured image, significantly reducing the computational complexity of the process. The image statistics may be captured at a higher spatial resolution than the correction tables in some embodiments, and in other embodiments the image statistics and correction tables may be the same resolution.

The process 400 then moves to step 415 in which the reference table is used to correct the image statistics. In some embodiments, this correction may be performed separately for each bayer channel by an element-wise multiplication of the per-channel reference table with the per-channel scene statistics.

At block 420, the process 400 estimates the color shading in the image statistics corrected by the reference table. A color shading estimation technique may be used to separate out a slow-varying shading function from the actual image content. In some embodiments, the corrected scene statistics in the RGB Bayer domain may be transformed into hue components. The corrected scene statistics may be transformed into hue components H1 and H2 using the following transformations:

$$H_1^t \triangleq \frac{2\hat{X}_R^t}{\hat{X}_{Gr}^t + \hat{X}_{Gb}^t},$$

$$H_2^t \triangleq \frac{2\hat{X}_B^t}{\hat{X}_{Gr}^t + \hat{X}_{Gb}^t},$$

$$(1)$$

where the division operations in the above set of equations are performed element-wise. Each hue channel represents a linear combination (in logarithmic domain) of a color shading component and an intrinsic (actual) color component representing true hue content of the scene. The color shading estimation may recover the shading components from the observed hue components for the image captured.

In some embodiments, a single-channel color shading estimation may be performed. The color shading may be a smooth function of the incident angle of light arriving at the image sensor. Since the pre-calibrated reference table is also smooth spatially, the color shading left over after correcting the scene statistics with the reference table may also be a slow-varying signal. Therefore, the shading component S may be a smooth mask with dense and small gradients. On the other hand, the intrinsic color component **I** of the scene statistics may be a piece-wise smooth pattern which contains a small number of non-zero gradients. Accordingly, we can recover the two additive components **S** and **I** from the observed hue **H** by minimizing the number of non-zero gradients in **I** and the magnitude of gradients in **S**. In an embodiment, the measure of gradient sparsity on a two-dimensional (2D) map $Z \in$ Rmn, i.e., the number of non-zero gradient components, can be defined as follows:

$$C(Z) \triangleq \#\{i | D_{x,i}\vec{Z} \neq 0, D_{y,i}\vec{Z} \neq 0\},$$

$$(2)$$

where #{ } is the counting operator and $D_i\vec{Z}$, $[D_{x,i}\vec{Z}; D_{y,i}\vec{Z}]$ denotes the 2D partial gradients of Z at location i (note: $D_{x,i}$ and $D_{y,i} \in$ R$^{m \times n \times 1}$).

Given the hue channel **H,** the color shading can recover the color shading component **S** and intrinsic color component **I** by performing the following minimization:

$$\min_{\mathbf{S},\mathbf{I}} M(\mathbf{S}) + \lambda C(\mathbf{I}), \quad \text{s. t.} \quad \mathbf{S} + \mathbf{I} = \mathbf{H},$$

$$(3)$$

where $\lambda$ is a weight parameter directly controlling the significance of the gradient sparsity of **I** and $M(\mathbf{S}) \triangleq \Sigma_i (D_{x,i}\vec{\mathbf{S}})^2 + (D_{y,i}\vec{\mathbf{S}})^2$ denotes the Sum-of-the-Squares-of-Gradient-Magnitudes (SSGM) on **S**. Accordingly, some embodiments of the color shading estimation enforce the smoothness of **S** by minimizing its squared gradient magnitudes, while seeking the piecewise smoothness (or gradient sparsity) of **I** by minimizing the number of its non-zero gradient components.

In another implementation of the color shading estimation, the sparsity measure $C(\mathbf{I})$ can be replaced by its two different variants $C_1(\mathbf{I})$ and $C_2(\mathbf{I})$, which respectively define the sparsity of **I** in the gradient-magnitude and partial-gradient domains:

$$C_1(\mathbf{I}) \triangleq \sum_i \|\sqrt{(D_{x,i}\vec{\mathbf{I}})^2 + (D_{y,i}\vec{\mathbf{I}})^2}\|_0,$$

$$C_2(\mathbf{I}) \triangleq \sum_i \|D_{x,i}\vec{\mathbf{I}}\|_0 + \|D_{y,i}\vec{\mathbf{I}}\|_0.$$

$$(4)$$

where $\| \|_0$ denotes the $\ell_0$-norm.

Accordingly, in some embodiments the two additive components- the shading component and the intrinsic color component- may be recovered from the observed hue by minimizing the number of non-zero gradients in the intrinsic color component and the magnitude of gradients in the shading component. Some embodiments may be calculated through an iterative process, and to reduce latency other embodiments may be calculated through a single iteration. For example, to calculate color shading correction tables in real time for some or all frames in a video sequence, the color shading may be estimated through a single iteration in order to reduce run time.

In other embodiments, a joint-channel color shading estimation may be performed to recover the R/G and B/G components of color shading from two observed hue channels in a joint manner. Such joint-channel color shading estimation may be calculated based on the fact that the intrinsic color components often contain non-zero gradients at the same locations. In one embodiment, the separate-channel color shading estimation framework described above can be extended to recover the R/G and B/G components of color shading from the two observed hue channels in a joint manner. The notation $H_i$, $S_i$, and $I_i$ (where $i = 1,2$), respectively, is used to refer to the observed hue, color shading, and intrinsic image color in the R/G and B/G channels. The joint-channel color shading estimation can take advantage of the fact that the intrinsic color components $I_1$ and $I_2$ often contain non-zero gradients at the same locations. Given the observed hue channels $H_1$ and $H_2$, the joint-channel color shading estimation technique recovers its intrinsic component $(I_1, I_2)$ and color shading component $(S_1, S_2)$ by

$$\min_{S_1, S_2, I_1, I_2} \quad M(S_1) + M(S_2) + \lambda C([I_1 : I_2]),$$
$$\text{s. t.} \quad S_1 + I_1 = H_1, S_2 + I_2 = H_2. \tag{5}$$

where $[I_1 : I_2] \in R^{m \times n \times 2}$ denotes a 3D cube consisting of two 2D layers $I_1$ and $I_2$. The gradient sparsity measures for joint-channel color shading estimation are denoted as:

$$C_1([I_1 : I_2]) = \sum_i \left\| \sqrt{\sum_{j=1}^{2} (D_{x,i} \vec{I}_j)^2 + (D_{y,i} \vec{I}_j)^2} \right\|_0,$$
$$C_2([I_1 : I_2]) = \sum_i \sum_{j=1}^{2} \| D_{x,i} \vec{I}_j \|_0 + \| D_{y,i} \vec{I}_j \|_0. \tag{6}$$

Next, at block 425, the process 400 dynamically updates the reference table. After the shading components S1 and S2 have been estimated, the reference table may be dynamically updated to yield the correction table optimal for correcting the image. In a video sequence consisting of a sequence of image frames, the correction table may be calculated for each of the $t$-th frame in the video sequence, where $t$ denotes the time of the captured frame. In some embodiments of the DCSC process 400 for color shading correction in a video sequence, the table may be updated according to the following set of equations, where the division operations may be performed element-wise:

$$T_R^t = \frac{T_R^0}{S_1^t},$$
$$T_{Gr}^t = T_{Gr}^0,$$
$$T_{Gb}^t = T_{Gb}^0,$$
$$T_B^t = \frac{T_B^0}{S_2^t}, \tag{7}$$

At block 430, the process 400 uses the updated reference table to correct color shading in the captured image. Accordingly, the DCSC process 400 does not require costly per-unit-calibration and is robust to module-to-module variations. In addition, the DCSC process 400 neither assumes that the illuminant associated with the captured image is included in the pre-calibration, nor relies on a white balance algorithm to give an accurate detection of the scene illuminant.

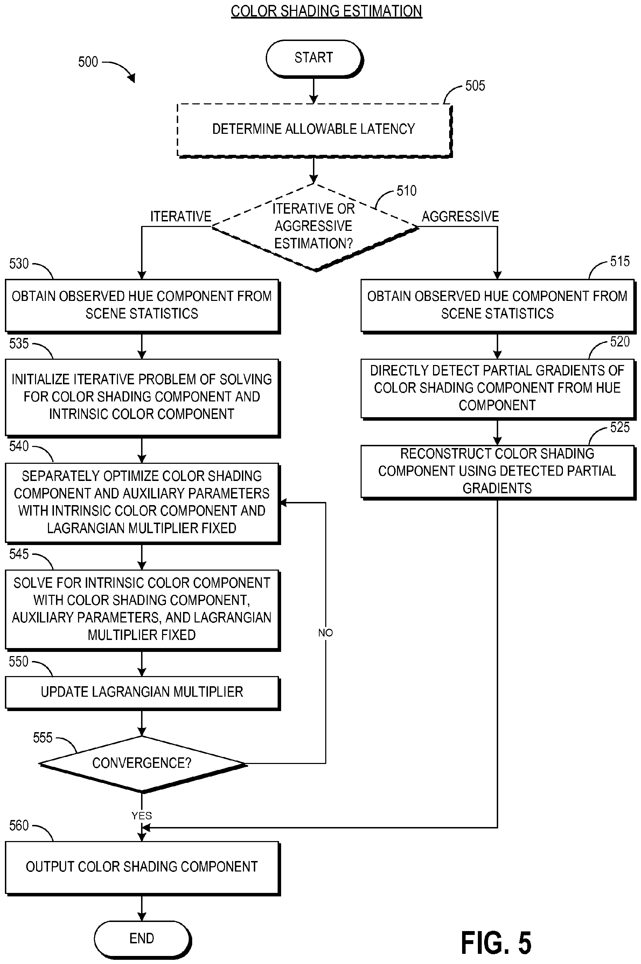

FIG. 5 illustrates an embodiment of a color shading estimation process 500. Some implementations of process 500 can take place at block 420 of FIG. 4. However, the color shading estimation process 500 can be implemented alone or as a part of any technique suitable for color shading estimation or correction. Further, though discussed in the context of the color shading estimation module 310, this is for illustrative purposes and the process 500 can be executed by any system suitable for color shading estimation.

The process 500 begins at optional block 505 in which the color shading estimation module 310 determines the allowable latency for the process 500. For example, the color shading estimation module 310 may determine whether the input image data is a video sequence of images being corrected in real time, corresponding to a low amount of allowable latency. In other color shading estimation applications, for example for a still image, the amount of allowable latency may be higher. For example, in an implementation having scene statistics of the resolution 32 x 16, an embodiment of the iterative sub-process can take somewhere in the range of approximately 200 mx to approximately 300 ms, which can be considered a large latency for real-time applications of dynamic color shading correction. Such latency can result in a shading correction table computed using stats of the current frame being applied to a later frame (in a video sequence), whose scene statistics might not well match with the current frame. This can result in undesirable color tint artifacts called trailing color tint, which is very severe in a rapidly changing scene. Accordingly, at optional decision block 510, the color shading estimation module 310 determines whether to execute an iterative or aggressive color shading estimation sub-process.

In some embodiments, the iterative sub-process can require tens of iterations to converge, causing latency in dynamic color shading correction, while the aggressive sun-process can obtain a valid solution after only one iteration. The iterative color shading estimation process can be executed for higher quality results in circumstances associated with higher allowable amounts of latency, greater processing capabilities, or for joint-channel color shading estimation, in some implementations. The aggressive color shading estimation process can be executed in circumstances associated with lower allowable amounts of latency or in systems with lower processing capabilities, in some implementations. In some embodiments, optional blocks 505 and 510 can be bypassed and the color shading estimation module 310 can be configured to perform one of the iterative and aggressive color shading estimation sub-processes.

The iterative color shading estimation sub-process begins at block 530 in which the color shading estimation module 310 obtains the hue component or components from scene statistics representing a captured image. Next, at block 535, the color shading estimation module 310 initializes an iterative problem of solving for the color shading component and the intrinsic color shading component, for example as defined above in Eq. (3). For example, some embodiments can apply an augmented Lagrangian method by introducing a Lagrangian multiplier $\mathbf{Y} \in \mathbb{R}^{m \times n}$ and an over-regularization parameter $\beta$ to transform the equality constraint of Eq. (3) into the augmented Lagrangian function as follows:

$$\mathcal{L}(\mathbf{S}, \mathbf{I}, \mathbf{Y}) = \|D_x \mathbf{S}\|_2^2 + \|D_y \mathbf{S}\|_2^2 + \lambda C(\mathbf{I})$$
$$+ \mathbf{Y}^T(\mathbf{S} + \mathbf{I} - \mathbf{H}) + \frac{\beta}{2}\|\mathbf{S} + \mathbf{I} - \mathbf{H}\|_2^2, \tag{8}$$

where $D_x \in \mathbb{R}^{mn \times mn}$ is generated by concatenating $D_{x,i}$, $1 \le i \le MN$ along the vertical direction and $D_y \in \mathbb{R}^{mn \times mn}$ is generated in a similar way. By introducing the auxiliary gradient parameters $G_x$ and $G_y$, where $G_x = D_x \mathbf{I}$ and $G_y = D_y \mathbf{I}$, the gradient sparsity measures can be reformulated as:

$$C_1(G_x, G_y) = \sum_i \|\sqrt{(G_{x,i})^2 + (G_{y,i})^2}\|_0,$$
$$C_2(G_x, G_y) = \sum_i \|G_{x,i}\|_0 + \|G_{y,i}\|_0. \tag{9}$$

which can be simplified using an operator splitting technique as follows:

$$\mathcal{L}(\mathbf{S}, \mathbf{I}, G_x, G_y, \mathbf{Y}) = \|D_x \mathbf{S}\|_2^2 + \|D_y \mathbf{S}\|_2^2$$
$$+ \lambda C(G_x, G_y) + \frac{\beta}{2}\|D_x \mathbf{I} - G_x\|_2^2 + \frac{\beta}{2}\|D_y \mathbf{I} - G_y\|_2^2$$
$$+ \mathbf{Y}^T(\mathbf{S} + \mathbf{I} - \mathbf{H}) + \frac{\beta}{2}\|\mathbf{S} + \mathbf{I} - \mathbf{H}\|_2^2. \tag{10}$$

The simplified augmented Lagrangian function can be minimized by iterating between the following two steps:

$$\text{Solve } \mathbf{S}^{k+1}, G_x^{k+1}, G_y^{k+1}, \mathbf{I}^{k+1} \text{ by min } \mathcal{L} (\mathbf{S}, G_x, G_y, \mathbf{I}, \mathbf{Y}^k). \tag{11}$$

$$\text{Update } \mathbf{Y}^{k+1} \leftarrow \mathbf{Y}^k + \beta(\mathbf{S}^{k+1} + \mathbf{I}^{k+1} - \mathbf{H}). \tag{12}$$

Each iteration requires an exact minimization of the augmented Lagrangian function over four parameters **S**, $G_x$, $G_y$, and **I**, which is computationally expensive. Fortunately, these four parameters can be separated into two groups: (1) **S**, $G_x$, $G_y$ and (2) **I**, such that there is a closed form solution to the minimization of the augmented Lagrangian function over one group of parameters when the other group is fixed. Thus, some embodiments apply the alternating direction method to minimize $\mathcal{L}$ (**S**, $G_x$, $G_y$, **I**), which iterates between optimizing **S**, $G_x$, $G_y$ with **I** fixed and optimizing **I** with **S** fixed. Given the Lagragian multiplier **Y** is updated at a sufficient rate, we can relax the exact minimization of $\mathcal{L}$ (**S**, **I**, $Y^k$) as one round of alternating optimization over two groups of parameters.

Accordingly, at block 540, the color shading estimation module 310 can separately optimize the color shading component **S** and partial gradient parameters $G_x$ and $G_y$ as defined in Eq. (11) with the intrinsic color component $I^k$ and Lagrangian multiplier $Y^k$ fixed. In some embodiments, given the initiatized values $I^k$ and $Y^k$, the color shading component **S** can be optimized by minimizing:

$$\mathcal{L}_1(\mathbf{S}) = \|D_x\mathbf{S}\|_2^2 + \|D_y\mathbf{S}\|_2^2 + \frac{\beta}{2}\|\mathbf{S} + \mathbf{I}^k + \frac{\mathbf{Y}^k}{\beta} - \mathbf{H}\|_2^2, \tag{13}$$

and the partial gradients $G_x$ and $G_y$ can be optimized by minimizing:

$$\mathcal{L}_2(G_x, G_y) = \lambda C(G_x, G_y) + \frac{\beta}{2}\|D_x\mathbf{I} - G_x\|_2^2 + \frac{\beta}{2}\|D_y\mathbf{I} - G_y\|_2^2 \tag{14}$$

At block 545, the color shading estimation module 310 can recover **I** with $\mathbf{S}^{k+1}$, $G_x^{k+1}$, $G_y^{k+1}$, $\mathbf{Y}^k$ fixed according to Eq. (11). In some embodiments, given updated $G_x^{k+1}$, $Gy^{k+1}$, and $\mathbf{S}^{k+1}$, the intrinsic color component **I** can be recovered by minimizing:

$$\mathcal{L}_3(\mathbf{I}) = \|D_x\mathbf{I} - G_x^{k+1}\|_2^2 + \|D_y\mathbf{I} - G_y^{k+1}\|_2^2 + \|\mathbf{S}^{k+1} + \mathbf{I} + \frac{\mathbf{Y}^k}{\beta} - \mathbf{H}\|_2^2 \tag{15}$$

At block 550, the color shading estimation module 310 can update **Y** according to Eq. (12). At decision block 555, the color shading estimation module 310 can determine whether **S** and **I** have converged. If **S** and **I** have not converged, then the process 500 loops back to block 540 to perform another iteration of optimization of Eq. (11) and Eq. (12). If **S** and **I** have converged, then the process 500 transitions to block 560 to output the color shading component **S**, for example for color shading correction.

The aggressive color shading estimation sub-process begins at block 515 in which the color shading estimation module 310 obtains the hue component or components from scene statistics representing a captured image. Typically, the intrinsic color component **I** has much larger gradient magnitudes than the color shading component **S**. This indicates that a roughly correct estimate of color shading can be obtained in most cases without tens of iterations between the piecewise-smoothness enforcement on **I** and the smooth filtering on **I**. Accordingly, at block 520, the color shading estimation module 310 directly detects the partial gradients of the color shading component **S** from those of the hue channel **H** according to their values. In one embodiment, given the observed hue channel **H**, the partial gradients ($G_x$, $G_y$) of the color shading component **S** can be jointly recovered as:

$$(\hat{G}_{x,i}, \hat{G}_{y,i}) = \begin{cases} (D_{x,i}\mathbf{H}, D_{y,i}\mathbf{H}) & \text{if}\,(D_{x,i}\mathbf{H})^2 + (D_{y,i}\mathbf{H})^2 \leq \frac{\lambda}{\beta} \\ (0,0) & \text{else} \end{cases}, \tag{16}$$

or can be separately recovered as:

$$\hat{G}_{x,i} = \begin{cases} D_{x,i}\mathbf{H} & \text{if } (D_{x,i}\mathbf{H})^2 \leq \frac{\lambda}{\beta} \\ 0 & \text{else} \end{cases},$$

$$\hat{G}_{y,i} = \begin{cases} D_{y,i}\mathbf{H} & \text{if } (D_{y,i}\mathbf{H})^2 \leq \frac{\lambda}{\beta} \\ 0 & \text{else} \end{cases}. \tag{17}$$

This assumes that the partial gradients of the color shading component should be of small magnitude, which is not always true at the image boundary. Accordingly, in some implementations, the partial gradients at the bottom boundary and the right boundary can be recovered as follows:

$$\hat{G}_{x,m,j} = \begin{cases} D_{x,m,j}\mathbf{H} & \text{if } |D_{x,m,j}\mathbf{H}| < |\sum_{i=1}^{m-1} \hat{G}_{x,i,j}| \\ -\sum_{i=1}^{m-1} \hat{G}_{x,i,j} & \text{else} \end{cases}$$

$$\hat{G}_{y,i,n} = \begin{cases} D_{y,i,n}\mathbf{H} & \text{if } |D_{y,i,n}\mathbf{H}| < |\sum_{j=1}^{n-1} \hat{G}_{y,i,j}| \\ -\sum_{j=1}^{n-1} \hat{G}_{y,i,j} & \text{else} \end{cases} \tag{18}$$

where $(G_{x,i,j}, G_{y,i,j})$ denote the partial gradients of **S** at location $(i, j)$.

At block 520, the color shading estimation module 310 reconstructs the color shading component using the detected partial gradients. In some embodiments, given the recovered partial gradients $(G_x, G_y)$, the color shading component **S** can be recovered by two sequential steps, as shown by Eq. (19) and Eq. (20):

$$\mathbf{S} = \mathcal{F}^{-1}\left(\frac{D_x^T \hat{G}_x + D_y^T \hat{G}_y}{\sum_{i=1}^{2} \mathcal{F}(\text{PSF}_i) + \tau}\right) \tag{19}$$

$$\mathbf{S} = \mathbf{S} - \text{mean}(\mathbf{S}) \tag{20}$$

where $\tau$ is set as a very small constant (e.g., $10^{-10}$) and the recovered color shading component **S** is shifted such that its mean is zero, and where $\mathcal{F}$ and $\mathcal{F}^{-1}$ denote Fourier and inverse Fourier transforms, respectively. Next, the process 500 transitions to block 525 to output the color shading component **S,** for example for color shading correction.

Conclusion

The framework for dynamic color shading correction (DCSC) described herein can estimate the color shading on the fly from the scene statistics of a captured image and use the estimated shading for color shading correction. At the core of the DCSC framework is a color shading estimation method that separates out the color shading component from the actual image content by its unique characteristic in the gradient domain. An iterative color shading estimation process can solve this problem by applying the alternating direction. An aggressive color shading estimation process can be used to reduce the running time of the color shading estimation to be less than approximately 10 ms in some embodiments, which enables the DCSC to handle a dynamic scene. Experimental results and a real implementation on the sample device showed (1) the effectiveness of the DCSC in removing the color shading artifact under a variety of illuminants, and (2) that the DCSC is highly desirable in the current image sensor pipeline, due to the limit of the pre-calibration based method of color shading correction.

Terminology

The technology is operational with numerous other general purpose or special purpose computing system environments or configurations. Examples of well-known computing systems, environments, and/or configurations that may be suitable for use with the invention include, but are not limited to, personal computers, server computers, hand-held or laptop devices, multiprocessor systems, processor-based systems, programmable consumer electronics, network PCs, minicomputers, mainframe computers, distributed computing environments that include any of the above systems or devices, and the like.

As used herein, instructions refer to computer-implemented steps for processing information in the system. Instructions can be implemented in software, firmware or hardware and include any type of programmed step undertaken by components of the system.

A processor may be any conventional general purpose single- or multi-chip processor such as a Qualcomm® processor, a Pentium® processor, a Pentium® Pro processor, a 8051 processor, a MIPS® processor, a Power PC® processor, or an Alpha® processor. In addition, the processor may be any conventional special purpose processor such as a digital signal processor or a graphics processor. The processor typically has conventional address lines, conventional data lines, and one or more conventional control lines.

The system is comprised of various modules as discussed in detail. As can be appreciated by one of ordinary skill in the art, each of the modules comprises various sub-routines, procedures, definitional statements and macros. Each of the modules are typically separately compiled and linked into a single executable program. Therefore, the description of each of the modules is used for convenience to describe the functionality of the preferred system. Thus, the processes that are undergone by each of the modules may be arbitrarily redistributed to one of the other modules, combined together in a single module, or made available in, for example, a shareable dynamic link library.

The system may be used in connection with various operating systems such as Linux®, UNIX® or Microsoft Windows®. The system may be written in any conventional programming language such as C, C++, BASIC, Pascal, or Java, and ran under a conventional operating system. C, C++, BASIC, Pascal, Java, and FORTRAN are industry standard programming languages for which many commercial compilers can be used to create executable code. The system may also be written using interpreted languages such as Perl, Python or Ruby.

Those of skill will further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

In one or more example embodiments, the functions and methods described may be implemented in hardware, software, or firmware executed on a processor, or any combination thereof. If implemented in software, the functions may be stored on or transmitted over as one or more instructions or code on a computer-readable medium. Computer-readable media include both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

The foregoing description details certain embodiments of the systems, devices, and methods disclosed herein. It will be appreciated, however, that no matter how detailed the foregoing appears in text, the systems, devices, and methods can be practiced in many ways. As is also stated above, it should be noted that the use of particular terminology when describing certain features or aspects of the invention should not be taken to imply that the terminology is being re-defined herein to be restricted to including any specific characteristics of the features or aspects of the technology with which that terminology is associated.

It will be appreciated by those skilled in the art that various modifications and changes may be made without departing from the scope of the claims.

While various aspects and embodiments have been disclosed herein, other aspects and embodiments will be apparent to those skilled in the art. The various aspects and embodiments disclosed herein are for purposes of illustration and are not intended to be limiting.

**Claims**

1. A method in an electronic device for correcting color shading in a captured image of a captured image scene, the method comprising:

    receiving image data comprising the captured image and scene statistics, wherein the scene statistics are a downsampled version of the captured image;
    accessing a reference table, wherein the reference table comprises shading correction data calibrated under a typical illumination;
    correcting color shading in the downsampled version of the captured image using the reference table;
    estimating color shading in the corrected downsampled version of the captured image, wherein estimating color shading comprises:

        transforming the corrected downsampled version of the captured image into at least one hue channel (H) and estimating a first color shading component (S) and an intrinsic color component (I) which, when summed together, result in the at least one hue channel (H), wherein the intrinsic color component (I) represents the true hue content of the captured image scene;
        wherein estimating a first color shading component (S) and an intrinsic color component (I) comprises jointly minimizing the number of non-zero gradients in the intrinsic color component (I) and the magnitude of gradients in the first color shading component (S);

    updating the reference table based on the estimated color shading; and
    correcting color shading in the captured image using the updated reference table.

2. The method of Claim 1, further comprising separating a second color shading component from the intrinsic color component (I).

3. The method of Claim 2, wherein the first color shading component is estimated from a R/G hue channel (H1) and wherein the second color shading component is estimated from a B/G hue channel (H2).

4. The method of Claim 1, wherein estimating color shading is performed using an iterative color shading estimation process.

5. The method of Claim 4, wherein the iterative color shading estimation process alternately solves for a value of a color shading component (S) using a fixed intrinsic color component value, wherein the intrinsic color component (I) represents the true hue content of the captured image scene, and for a value of the intrinsic color component (I) using a fixed color shading component value until the value of the color shading component (S) and the value of the intrinsic color component (I) converge.

6. The method of Claim 1, wherein the image data comprises a video sequence comprising a plurality of image frames, and wherein the method further comprises:

    estimating color shading in each of the plurality of image frames;
    generating an updated reference table for each of the plurality of image frames; and
    correcting color shading in each of the plurality of image frames.

7. The method of Claim 1, wherein the reference table comprises a plurality of sub-tables, wherein each of the plurality of sub-tables is associated with one of a plurality of Bayer channels.

8. A dynamic color shading correction apparatus (200), comprising:

    a correction table data repository (210) configured to store a reference table, wherein the reference table comprises shading correction data calibrated on a reference module under a typical illumination;
    an initial color shading correction module configured to receive image data comprising a captured image and scene statistics, wherein the scene statistics are a downsampled version of the captured image, and to perform preliminary color shading correction on the downsampled version of the captured image using the reference table;
    a color shading estimation module (240) configured to estimate color shading in the corrected downsampled version of the captured image by:

transforming the corrected downsampled version of the captured image into at least one hue channel (H) and estimating a first color shading component (S) and an intrinsic color component (I) which, when summed together, result in the at least one hue channel (H), wherein the intrinsic color component (I) represents the true hue content of the captured image scene

wherein estimating a first color shading component (S) and an intrinsic color component (I) comprises jointly minimizing the number of non-zero gradients in the intrinsic color component (I) and the magnitude of gradients in the first color shading component (S);

a table updating module (240) configured to generate an updated table from the reference table and the estimated color shading; and

a color shading correction module (240) configured to correct color shading in the image data using the updated table.

9. The dynamic color shading correction apparatus of Claim 8, wherein the correction table data repository is further configured to store a plurality of sub-tables of the reference table, wherein each of the plurality of sub-tables is associated with one of a plurality of Bayer channels.

10. The dynamic color shading correction apparatus of Claim 9, wherein the color shading estimation module is further configured to estimate color shading in at least one of the plurality of Bayer channels in the scene statistics.

11. The dynamic color shading correction apparatus of Claim 10, wherein the table updating module is configured to update the plurality of sub-tables using a corresponding estimated color shading in the at least one of the plurality of Bayer channels.

**Patentansprüche**

1. Verfahren in einem elektronischen Gerät zum Korrigieren von Farbschattierung in einem aufgenommenen Bild einer aufgenommenen Bildszene, wobei das Verfahren Folgendes beinhaltet:

Empfangen von Bilddaten, die das aufgenommene Bild und Szenenstatistiken umfassen, wobei die Szenenstatistiken eine unterabgetastete Version des aufgenommenen Bildes sind;

Zugreifen auf eine Referenztabelle, wobei die Referenztabelle Schattierungskorrekturdaten umfasst, die unter einer typischen Beleuchtung kalibriert wurden;

Korrigieren von Farbschattierung in der unterabgetasteten Version des aufgenommenen Bildes anhand der Referenztabelle;

Schätzen von Farbschattierung in der korrigierten unterabgetasteten Version des aufgenommenen Bildes, wobei das Schätzen von Farbschattierung Folgendes beinhaltet:

Transformieren der korrigierten unterabgetasteten Version des aufgenommenen Bildes in wenigstens einen Farbtonkanal (H) und Schätzen einer ersten Farbschattierungskomponente (S) und einer intrinsischen Farbkomponente (I), die, wenn sie zusammensummiert werden, den wenigstens einen Farbtonkanal (H) ergeben, wobei die intrinsische Farbkomponente (I) den wahren Farbtongehalt der aufgenommenen Bildszene repräsentiert;

wobei das Schätzen einer ersten Farbschattierungskomponente (S) und einer intrinsischen Farbkomponente (I) das gemeinsame Minimieren der Anzahl von Nicht-Null-Gradienten in der intrinsischen Farbkomponente (I) und der Größe von Gradienten in der ersten Farbschattierungskomponente (S) beinhaltet:

Aktualisieren der Referenztabelle auf der Basis der geschätzten Farbschattierung; und

Korrigieren von Farbschattierung im aufgenommenen Bild anhand der aktualisierten Referenztabelle.

2. Verfahren nach Anspruch 1, das ferner das Trennen einer zweiten Farbschattierungskomponente von der intrinsischen Farbkomponente (I) beinhaltet.

3. Verfahren nach Anspruch 2, wobei die erste Farbschattierungskomponente von einem R/G-Farbtonkanal (H1) geschätzt wird und wobei die zweite Farbschattierungskomponente von einem B/G-Farbtonkanal (H2) geschätzt wird.

4. Verfahren nach Anspruch 1, wobei das Schätzen von Farbschattierung mit einem iterativen Farbschattierungsschätzprozess durchgeführt wird.

EP 3 031 202 B1

**5.** Verfahren nach Anspruch 4, wobei sich der iterative Farbschattierungsschätzprozess abwechselnd für einen Wert einer Farbschattierungskomponente (S) anhand eines festen intrinsischen Farbkomponentenwerts, wobei die intrinsische Farbkomponente (I) den wahren Farbtongehalt der aufgenommenen Bildszene repärsentiert, und für einen Wert der intrinsischen Farbkomponente anhand eines festen Farbschattierungskomponentenwerts auflöst, bis der Wert der Farbschattierungskomponente (S) und der Wert der intrinsischen Farbkomponente konvergieren.

**6.** Verfahren nach Anspruch 1, wobei die Bilddaten eine Videosequenz umfassen, die mehrere Bildframes umfasst, und wobei das Verfahren ferner Folgendes beinhaltet:

Schätzen von Farbschattierung in jedem der mehreren Bildframes;
Erzeugen einer aktualisierten Referenztabelle für jeden der mehreren Bildframes; und
Korrigieren von Farbschattierung in jedem der mehreren Bildframes.

**7.** Verfahren nach Anspruch 1, wobei die Referenztabelle mehrere Untertabellen umfasst, wobei jede der mehreren Untertabellen mit einem von mehreren Bayer-Kanälen assoziiert ist.

**8.** Dynamische Farbschattierungskorrekturvorrichtung (200), die Folgendes umfasst:

ein Korrekturtabellendaten-Repository (210), das zum Speichern einer Referenztabelle konfiguriert ist, wobei die Referenztabelle Schattierungskorrekturdaten umfasst, die auf einem Referenzmodul unter einer typischen Beleuchtung kalibriert werden;
ein anfängliches Farbschattierungskorrekturmodul, konfiguriert zum Empfangen von Bilddaten, die ein aufgenommenes Bild und Szenenstatistiken umfassen, wobei die Szenenstatistiken eine unterabgetastete Version des aufgenommenen Bildes umfassen, und zum Durchführen einer vorläufigen Farbschattierungskorrektur an der unterabgetasteten Version des aufgenommenen Bildes anhand der Referenztabelle;
ein Farbschattierungsschätzmodul (240), konfiguriert zum Schätzen von Farbschattierung in der korrigierten unterabgetasteten Version des aufgenommenen Bildes durch:

Transformieren der korrigierten unterabgetasteten Version des aufgenommenen Bildes in wenigstens einen Farbtonkanal (H) und Schätzen einer ersten Farbschattierungskomponente (S) und einer intrinsischen Farbkomponente (I), die, wenn sie zusammensummiert werden, den wenigstens einen Farbtonkanal (H) ergeben, wobei die intrinsische Farbkomponente (I) den wahren Farbtongehalt der aufgenommenen Bildszene repräsentiert;
wobei das Schätzen einer ersten Farbschattierungskomponente (S) und einer intrinsischen Farbkomponente (I) das gemeinsame Minimieren der Anzahl von Nicht-Null-Gradienten in der intrinsischen Farbkomponente (I) und der Größe von Gradienten in der ersten Farbschattierungskomponente (S) beinhaltet;
ein Tabellenaktualisierungsmodul (240), konfiguriert zum Erzeugen einer aktualisierten Tabelle aus der Referenztabelle und der geschätzten Farbschattierung; und
ein Farbschattierungskorrekturmodul (240), konfiguriert zum Korrigieren von Farbschattierung in den Bilddaten anhand der aktualisierten Tabelle.

**9.** Dynamische Farbschattierungskorrekturvorrichtung nach Anspruch 8, wobei das Korrekturtabellendaten-Repository ferner zum Speichern mehrerer Untertabellen der Referenztabelle konfiguriert ist, wobei jede der mehreren Untertabellen mit einem der mehreren Bayer-Kanäle assoziiert ist.

**10.** Dynamische Farbschattierungskorrekturvorrichtung nach Anspruch 9, wobei das Farbschattierungsschätzmodul ferner zum Schätzen von Farbschattierung in mindestens einem der mehreren Bayer-Kanälen in den Szenenstatistiken konfiguriert ist.

**11.** Dynamische Farbschattierungskorrekturvorrichtung nach Anspruch 10, wobei das Tabellenaktualisierungsmodul zum Aktualisieren der mehreren Untertabellen anhand einer entsprechenden geschätzten Farbschattierung in dem mindestens einen der mehreren Bayer-Kanäle konfiguriert ist.

**Revendications**

**1.** Procédé de correction d'ombrage de couleurs dans une image capturée d'une scène d'image capturée, le procédé comprenant :

**16**

la réception de données d'image comprenant l'image capturée et des statistiques de scène, les statistiques de scène étant une version sous-échantillonnée de l'image capturée ;

la sollicitation d'une table de référence, la table de référence comprenant des données de correction d'ombrage étalonnées sous un éclairage type ;

la correction de l'ombrage de couleurs dans la version sous-échantillonnée de l'image capturée à l'aide de la table de référence ;

l'estimation de l'ombrage de couleurs dans la version sous-échantillonnée de l'image capturée corrigée, l'estimation de l'ombrage de couleurs comprenant :

la transformation de la version sous-échantillonnée de l'image capturée corrigée en au moins un canal de teinte (H) et l'estimation d'une première composante d'ombrage de couleurs (S) et d'une composante de couleur intrinsèque (I) qui, additionnées, produisent l'au moins un canal de teinte (H), la composante de couleur intrinsèque (I) représentant la teneur en teinte vraie de la scène d'image capturée ;

dans lequel l'estimation d'une première composante d'ombrage de couleur (S) et d'une composante de couleur intrinsèque (I) comprend la minimisation conjointe du nombre de gradients non nuls dans la composante de couleur intrinsèque (I) et de la grandeur de gradients dans la première composante d'ombrage de couleurs (S) ;

l'actualisation de la table de référence en fonction de l'ombrage de couleurs estimé ; et

la correction de l'ombrage de couleurs dans l'image capturée à l'aide de la table de référence actualisée.

2. Procédé selon la revendication 1, comprenant en outre la séparation d'une seconde composante d'ombrage de couleurs de la composante de couleur intrinsèque (I).

3. Procédé selon la revendication 2, dans lequel la première composante d'ombrage de couleurs est estimée à partir d'un canal de teinte R/G (H1) et dans lequel la seconde composante d'ombrage de couleurs est estimée à partir d'un canal de teinte B/G (H2).

4. Procédé selon la revendication 1, dans lequel l'estimation de l'ombrage de couleurs est réalisée en utilisant un processus d'estimation d'ombrage de couleurs itératif.

5. Procédé selon la revendication 4, dans lequel le processus d'estimation d'ombrage de couleurs itératif en variante résout une valeur d'une composante d'ombrage de couleurs (S) en utilisant une valeur de composante de couleur intrinsèque fixe, la composante de couleur intrinsèque (I) représentant la teneur en teinte vraie de la scène d'image capturée, et pour une valeur de la composante de couleur intrinsèque (I) en utilisant une valeur de composante d'ombrage de couleurs fixe jusqu'à ce que la valeur de la composante d'ombrage de couleurs (S) et la valeur de la composante de couleur intrinsèque (I) convergent.

6. Procédé selon la revendication 1, dans lequel les données d'image comprennent une séquence vidéo comprenant une pluralité de trames d'images, et le procédé comprenant en outre :

l'estimation de l'ombrage de couleurs dans chacune de la pluralité de trames d'images ;
la génération d'une table de référence actualisée pour chacune de la pluralité de trames d'images ; et
la correction de l'ombrage de couleurs dans chacune de la pluralité de trames d'images.

7. Procédé selon la revendication 1, dans lequel la table de référence comprend une pluralité de sous-tables, chacune de la pluralité de sous-tables étant associée à un d'une pluralité de canaux de Bayer.

8. Appareil de correction dynamique d'ombrage de couleurs (200), comprenant :

un référentiel de données de table de correction (210) configuré pour mémoriser une table de référence, la table de référence comprenant des données de correction d'ombrage étalonnées sur un module de référence sous un éclairage type ;
un module de correction initiale de couleurs configuré pour recevoir des données d'image comprenant une image capturée et des statistiques de scène, les statistiques de scène étant une version sous-échantillonnée de l'image capturée, et exécuter une correction préliminaire d'ombrage de couleurs sur la version sous-échantillonnée de l'image capturée à l'aide de la table de référence ;
un module d'estimation d'ombrage de couleurs (240) configuré pour estimer l'ombrage de couleurs dans la version sous-échantillonnée de l'image capturée corrigée par :

transformation de la version sous-échantillonnée de l'image capturée corrigée en au moins un canal de teinte (H) et estimation d'une première composante d'ombrage de couleurs (S) et d'une composante de couleur intrinsèque (I) qui, additionnées, produisent l'au moins un canal de teinte (H), la composante de couleur intrinsèque (I) représentant la teneur en teinte vraie de la scène d'image capturée ;
dans lequel l'estimation d'une première composante d'ombrage de couleurs (S) et d'une composante de couleur intrinsèque (I) comprend la minimisation conjointe du nombre de gradients non nuls dans la composante de couleur intrinsèque (I) et de la grandeur de gradients dans la première composante d'ombrage de couleurs (S) ;

un module d'actualisation de table (240) configuré pour générer une table actualisée à partir de la table de référence et de l'ombrage de couleurs estimé ; et
un module de correction d'ombrage de couleurs (240) configuré pour corriger l'ombrage de couleurs dans les données d'image à l'aide de la table actualisée.

9. Appareil de correction dynamique d'ombrage de couleurs selon la configuration 8, dans lequel le référentiel de données de table de correction est configuré en outre pour mémoriser une pluralité de sous-tables de la table de référence, chacune de la pluralité de sous-tables étant associée à un d'une pluralité de canaux de Bayer.

10. Appareil de correction dynamique d'ombrage de couleurs selon la configuration 9, dans lequel le module d'estimation d'ombrage de couleurs est configuré en outre pour estimer l'ombrage de couleurs dans au moins un de la pluralité de canaux de Bayer dans les statistiques de scène.

11. Appareil de correction dynamique d'ombrage de couleurs selon la configuration 10, dans lequel le module d'actualisation de table est configuré pour actualiser la pluralité de sous-tables en utilisant un ombrage de couleurs estimé correspondant dans l'au moins un de la pluralité de canaux de Bayer.

**FIG. 1A**

**FIG. 1B**

**FIG. 1C**

SYSTEM OVERVIEW

FIG. 2

**FIG. 3**

DYNAMIC COLOR SHADING CORRECTION

400

START

405
ACCESS REFERENCE TABLE

410
RECEIVE IMAGE DATA INCLUDING SCENE STATISTICS

415
CORRECT SCENE STATISTICS USING REFERENCE TABLE

420
ESTIMATE COLOR SHADING

425
UPDATE REFERENCE TABLE

430
CORRECT COLOR SHADING WITH UPDATED TABLE

END

# FIG. 4

COLOR SHADING ESTIMATION

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120120255 A

**Non-patent literature cited in the description**

- Single-Image Vignetting Correction. **YUANJIE ZHENG et al.** IEEE TRANSACTIONS ON PATTERN ANALYSIS AND MACHINE INTELLIGENCE. IEEE COMPUTER SOCIETY, 01 December 2009, vol. 31, 2243-2256